# EUROPÄISCHE PATENTSCHRIFT

(11) **EP 1 113 951 B1**
(45) Veröffentlichungstag und Bekanntmachung des Hinweises auf die Patenterteilung: **27.10.2004**
(21) Anmeldenummer: 00947917.1
(22) Anmeldetag: 04.07.2000
(51) Int. Cl.: B60R 21/24

(54) **INSASSENSCHUTZVORRICHTUNG IM LENKRAD EINES KRAFTFAHRZEUGES**
OCCUPANT PROTECTION DEVICE LOCATED IN THE STEERING WHEEL OF A MOTOR VEHICLE
DISPOSITIF DE PROTECTION DU CONDUCTEUR D'UN VEHICULE AUTOMOBILE, SITUE DANS LE VOLANT DU VEHICULE AUTOMOBILE

(30) Priorität: 15.07.1999 DE 19932696
(43) Veröffentlichungstag der Anmeldung: 11.07.2001
(73) Patentinhaber: Conti Temic Microelectronic GmbH, 90411 Nürnberg (DE)
(72) Erfinder: FENDT, Günter, D-86529 Schrobenhausen (DE); KÜBLBECK, Hermann, D-86529 Schrobenhausen (DE); STEINER, Peter, D-86529 Schrobenhausen (DE); STEURER, Helmut, D-85302 Gerolsbach-Junkenhofen (DE); VOGL, Armin, D-86551 Aichach (DE)
(86) Internationale Anmeldenummer: PCT/EP2000/006210
(87) Internationale Veröffentlichungsnummer: WO 2001/005631

(56) Entgegenhaltungen:
- EP-A- 0 657 329
- DE-A- 19 628 837
- DE-A- 19 816 075
- FR-A- 2 142 619
- US-A- 3 795 414

## Beschreibung

Die Erfindung betrifft eine Insassenschutzvorrichtung im Lenkrad eines Kraftfahrzeuges gemäß dem Oberbegriff des Patentanspruchs 1. Eine solche Vorrichtung ist aus der DE 196 28 837 A1 bekannt.

Darüber hinaus sind Insassenschutzeinrichtungen mit mehreren voneinander unabhängig zündbaren Stufen und teilweise Mehrkammer-Gassäcken beispielsweise der DE 195 41 924 A1, der DE 196 11 718 A1 oder der DE 198 16 989 A1 zu entnehmen. Dabei wird die Stärke der Schutzwirkung, insbesondere das Aufblasvolumen entsprechend der Schwere des Unfalls angepasst.

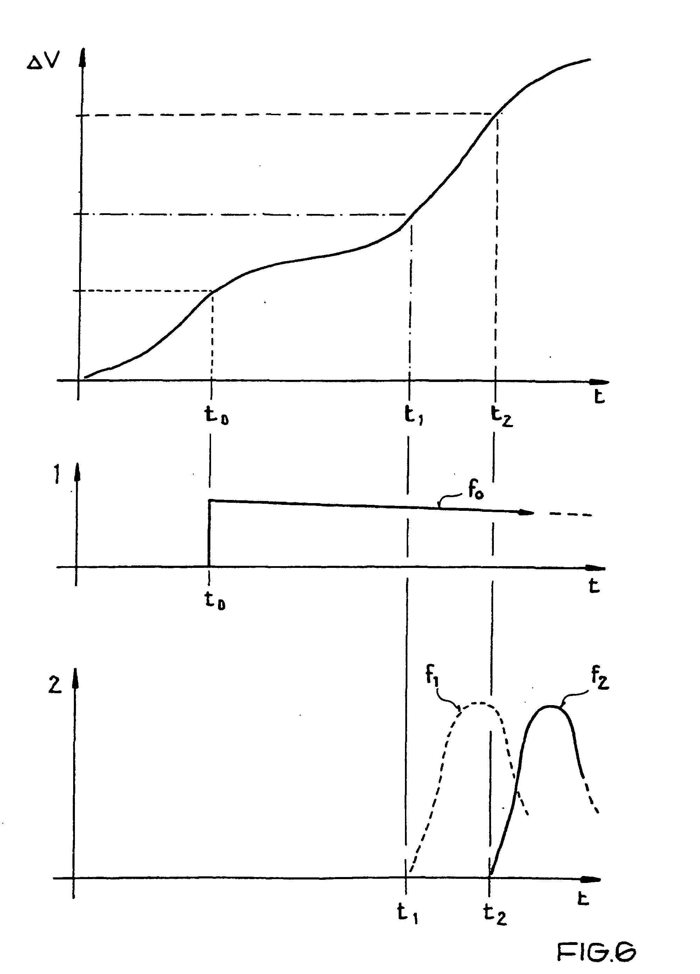

Eine weitere Art von Insassenschutzvorrichtungen mit einer Schutzfunktion des Insassen zeitlich nach dem Erschlaffen des eigentlichen Airbags ist beispielsweise der DE 38 29 368 A1, DE 38 33 888 A1 oder DE 92 11 421 U1 zu entnehmen. Derartige Gassack-Rückhaltesysteme weisen einen Gassack mit zwei Kammern auf, von denen die erste, größere die zweite umgibt, wie in Figur 5 der vorliegenden Anmeldung dargestellt. Erste und zweite Kammer müssen daher gleichzeitig ausgelöst werden. Die erste Kammer ist durch eine Wandung begrenzt, deren Material eine größere Gasdurchlässigkeit aufweist, als das die zweite Kammer begrenzende Material. Die innere zweite Kammer bleibt damit nach dem Aufblasen länger prall gefüllt und schützt zumindest in geringem Maße den Fahrer auch noch bei einem zweiten Aufprall insbesondere gegen den sonst freiliegenden Gasgenerator, während der erste Airbag bereits erschlafft ist. Die Überlappung von erster und zweiter Kammer ist fertigungstechnisch ungünstig und erlaubt nur eine gemeinsame Auslösung beider Airbags.

Die DE 41 29 314 A1 beschreibt ein Airbag-Sicherheitssystem, bei der neben einem ersten Airbag für den Fahrer mit einer ersten Auslösevorrichtung ein zweiter Airbag für den Beifahrer mit einer zweiten Auslösevorrichtung vorgesehen ist, wobei darüber hinaus für den zweiten Airbag auch eine dritte Auslösevorrichtung vorgesehen ist, die zeitverzögert auf die zweite Auslösevorrichtung aktiviert wird.

Aus der DE 197 03 945 A1, JP 03-32956 und der DE 297 00 804 U1 sind darüber hinaus Insassenschutzvorrichtungen zu entnehmen, die eine asymmetrische Form aufweisen, um den Insassen möglichst umfassend zu schützen.

So werden in der DE 197 03 945 A1 mehrere nebeneinander angeordnete Airbags gleichzeitig gezündet, wobei diese jeweils in Abhängigkeit von ihrer ungehinderten Ausbreitung in den Fahrgastraum stufenweise zunehmend mit Treibgas gefüllt werden. Der Aufblasvorgang soll dadurch von der Position und Bewegung des Insassen abhängig gesteuert und der Kopf des Insassen auch seitlich geschützt werden. Die Steuerung der Befüllung in Abhängigkeit von der ungehinderten Ausbreitung ist äußerst aufwendig und erscheint aufgrund der extrem kurzen Befüllungszeit von einigen Millisekunden nicht realisierbar.

Der JP 03-32956 A1 ist eine Insassenschutzvorrichtung mit einem mittleren kleinen Gassack üblicher. Entfaltungslänge und zwei äußeren Gassäcken mit größerer, den Kopf seitlich umschließender Entfaltungslänge zu entnehmen, wobei die Gassäcke gleichzeitig und aus einer gemeinsamen Gasquelle gefüllt sind. Zudem sind die Gassäcke untereinander mit Fangbändern verbunden, so dass eine separate Auslösung technisch nicht möglich ist.

Die DE 297 00 804 U1 beschreibt hingegen eine keilförmige Form der Insassenschutzvorrichtung vom Rumpf- zum Kopfbereich hin zunehmend.

Ein weiteres, bspw. aus der DE 43 20 147 A1 bekanntes Problem bei der Aktivierung von Insassenschutzsystemen entsteht dadurch, daß die Airbags auf einen in einer vorgegebenen Rückhalteposition befindlichen Insassen ausgelegt sind, der Insasse aber im Augenblick des Unfalls und der Aktivierung des Airbags gerade eine davon abweichende Position inne haben kann. Wird dieser Airbag bei einem Crash dann sofort voll aktiviert, können infolge des sehr geringen Ausgangsabstandes zwischen Airbag und Fahrzeuginsassen unerwünschte Belastungen des Insassen auftreten. Die DE 43 20 147 A1 beabsichtigt die Ausrichtung der Insassen auf die Soll-Position mittels einer ersten Stufe des Airbags, was jedoch eine ebenfalls nicht völlig unkritische Belastung auf den Insassen bedeutet und zudem innerhalb der kurzen Zeitspanne bis zum Aufschlagen des Insassen auf den Frontbereich, bspw. das Lenkrad kaum möglich ist.

Wegen der "Out-of-Position"-Problematik des Insassen sind beispielsweise der DE 38 09 074 C2, DE 40 19 677 A1 oder DE 40 23 109 A1 deshalb auch Insassenschutzvorrichtungen zu entnehmen, bei denen laufend die Sitzposition des betreffenden Insassen in Relation zu den zugeordneten Insassenschutzvorrichtungen gemessen wird. Daraus werden die Zeitpunkte und/oder der Umfang der einzuleitenden Schutzmaßnahmen abgeleitet.

Muß im Aufprallmoment jedoch erst die Sitzposition des Insassen bestimmt werden, bevor ein Airbag ausgelöst werden kann, verstreicht ein Teil des Verzögerungswegs ungenutzt.

Die DE 297 07 162 U1 beschreibt analog dazu einen Gassack mit wenigstens einem Fangband mit einer Reißnaht, wobei der Gassack in Abhängigkeit vom zugeführten Gasdruck bzw. der Gasmenge in einem "Out-of-Position"-Fall bis zu einer ersten Größe ausgelöst wird, bei dem die Reißnähte an den Fangbändern noch halten, durch höheren Gasdruck bzw. Gasmenge die Reißnähte jedoch aufreißen und die Fangbänder den Gassack erst auf in einer zweite Größe halten.

Der DE 196 28 837 A1 ist zudem ein Airbag zu entnehmen, bei dem sich die Entfaltungslänge mehrerer Kammern in Richtung des Insassen addiert, also in Richtung des Insassen vor dem ersten Gassack mittels seitlich verlaufender Zuführungsschläuche weitere Gassäcke gefüllt werden. Der technische Aufwand dafür ist erheblich und die Positionierung der zusätzlichen Gaskissen problematisch.

In der DE 40 11 492 A1 wird darüber hinaus eine Insassenschutzvorrichtung im Lenkrad eines Kraftfahrzeuges vorgestellt, bei der zumindest eine der Gasquellen außerhalb des Lenkrads angeordnet ist und über eine Druckleitung das Gas zu dem im Lenkrad angeordneten Airbag zugeführt wird. Als Gasquellen kommen neben pyrotechnisch aktivierbaren Gasgeneratoren auch Druckgaspatronen in Betracht, zumal deren bereitgestellte Gasmengen über Ventile und Verteiler auch dosiert und in unterschiedliche Airbags geleitetet werden können.

Die DE-OS 2 103 194 schlägt für eine Sicherheitsvorrichtung mit einem einzelnen durch Druckluft aus einem Druckluftgenerator oder Behälter füllbaren Luftkissen vor, dieses beim Erkennen eines drohenden Zusammenstosses durch sogenannte Precrashsensoren zunächst nur teilweise zu füllen und beim Auftreten eines Aufprall vollständig zu füllen, anderenfalls das teilweise gefüllte Luftkissen nach einer vorgegebenen Zeit zu entleeren.

Nachteil bisheriger Insassenschutzvorrichtungen mit Airbags ist in allen Fällen, daß diese zur Erzielung eines größtmöglichen Schutzes für den Insassen ein sehr großes Volumen aufweisen und somit die Sicht des Fahrers auf das Verkehrsgeschehen versperren und weitere gezielte Lenkmaßnahmen unmöglich machen. So weisen Airbags üblicherweise einen größeren Durchmesser als das eigentlich abzudeckende Lenkrad und eine relativ große Entfaltungslänge in Richtung des Fahrers auf. Der Fahrer kann nichts mehr sehen und das Lenkrad nicht mehr ergreifen.

Aus diesem Grund muss bei großvolumigen Airbags der Erschlaffungsvorgang durch entsprechend große Ausströmöffnungen auch sehr schnell erfolgen. Dies bedingt wiederum eine zeitlich exakte Bestimmung des Auslösezeitpunkts, da bei einer zu frühen Auslösung der Insasse schon nicht mehr ausreichend geschützt wird, bei zu später Zündung der Insasse zusätzlich gefährdet wird.

Aufgabe der Erfindung ist es, eine technisch einfachere Insassenschutzvorrichtung vorzustellen, die eine schnelle erste Absicherung der Insassen ermöglicht, ohne die Reaktionsmöglichkeiten des Fahrers zu stark zu beeinträchtigen.

Diese Aufgabe wird durch Anspruch 1 gelöst, indem für eine erste Stufe der Auslösung ein erster Airbag vorgesehen ist, dessen Formung und die von einer Gasquelle gelieferte Gasmenge so bestimmt sind, dass dieser erste Airbag im mit dieser Gasmenge gefüllten Zustand eine dem Durchmesser des Lenkrads entsprechende Aufprallzone und eine im Verhältnis zum Abstand zwischen Aufprallzone und Insassen kurze Entfaltungslänge in Richtung des Insassen aufweist. Der erste, kleine Airbag bildet sich also zunächst nur ein das Lenkrad abdeckendes, in Richtung zum Fahrer flaches Kissen, welches einen vorgegebenen Sichtbereich des Fahrers nur unwesentlich einschränkt und ihm das Lenken des Fahrzeuges weiter ermöglicht.

Für eine unabhängige und zeitlich nachfolgende zweite Stufe der Auslösung ist ein zweiter Airbag vorgesehen, der die Aufprallzone vergrößert und daher nur bei besonders schweren Unfällen gezündet wird. Die Auslösung des ersten und zweiten Airbags erfolgt unabhängig voneinander, vorzugsweise versetzt nacheinander oder aber bei unmittelbarer Überschreitung beider Beschleunigungsschwellen maximal annähernd gleichzeitig. Vorteilhafte Weiterbildungen sind den Unteransprüchen zu entnehmen.

So schließt sich der zweite Airbag im gefüllten Zustand schlauchförmig seitlich außen zumindest teilweise, vorzugsweise vollständig ringförmig um den ersten Airbag und beide Airbags bilden zusammen eine zweite, größere Aufprallzone. Der zweite Airbag wird vorzugsweise mit einem höheren Gasdruck gefüllt, der den ersten Airbag so zusammenpreßt, daß sich die Entfaltungslänge des ersten Airbags in Richtung des Fahrers verlängert, währenddessen sich selbstverständlich der Durchmesser bzw. die Aufprallzone des ersten Airbags reduziert. Der zweite Airbag kann dabei durch eine steuerbare, vorzugsweise gestuft auslösbare Gasquelle mit unterschiedlichen Gasmengen gefüllt und die Form beider Airbags sowie die Verformung des ersten Airbags so eingestellt werden.

Elastische Formungsmittel, bspw. Fangbänder, im ersten Airbag ermöglichen eine solche Verformung des ersten Airbags sowie auch Rückführung auf die ursprüngliche Form, wenn der äußere zweite Airbag erschlafft und so auch der Gasdruck im ersten Airbag sinkt.

Der erste Airbag weist vorzugsweise eine geringe Erschlaffung bzw. längere Standzeit auf, weshalb er frühzeitig ausgelöst werden kann und lange einen Schutz bietet. Der zweite Airbag, der vorzugsweise nur beim Überschreiten einer zweiten Beschleunigungsschwelle ausgelöst wird, gewährleistet so einen möglichst umfassenden Schutz, erschlafft aber auch schneller und behindert so im Fall seiner Auslösung die Sicht nur kurz.

In besonderer Weise kann eine solche Insassenschutzvorrichtung mit einer Erkennungseinrichtung von Größe und/oder Position des Insassen zu einem Auslöseverfahren kombiniert werden, bei dem der erste Airbag besonders frühzeitig beim Überschreiten einer ersten, sehr niedrigen Beschleunigungsschwelle unabhängig von der Größe und/oder Position des Insassen ausgelöst wird und der zweite Airbag in Abhängigkeit von Größe und/oder Position des Insassen bei einer zweiten, höheren Beschleunigungsschwelle ausgelöst wird. Der erste Airbag sichert die Insassen, ohne diese in "Out-of-Position"-Fällen oder durch Versperrung der Sicht zu gefährden. Die Erkennungseinrichtung hat ausreichend Zeit für die Entscheidung, ob und in welcher Stärke der zweite Airbag ausgelöst wird.

Die Erfindung soll nachfolgend anhand von Ausführungsbeispielen und Figuren näher erläutert werden. Kurze Beschreibung der Figuren:
- Figur 1: Airbagvorrichtung mit zwei Airbags und deren stufenweise Entfaltung,
- Figur 2: Gasquelle bestehend aus mehreren unabhängig voneinander zündbaren Stufen für eine Airbagvorrichtung gemäß Figur 1,
- Figur 3: Skizze des Fahrerinnenraums bei Auslösung des ersten Airbags,
- Figur 4: Skizze des Fahrerinnenraums nach dem Auslösen der zweiten Stufe,
- Figur 5: Zwei-Airbag-Insassenschutzvorrichtung gemäß der DE 92 11 421 U 1
- Figur 6: zeitlicher Verlauf der Auslösung im Vergleich zum Stand der Technik.

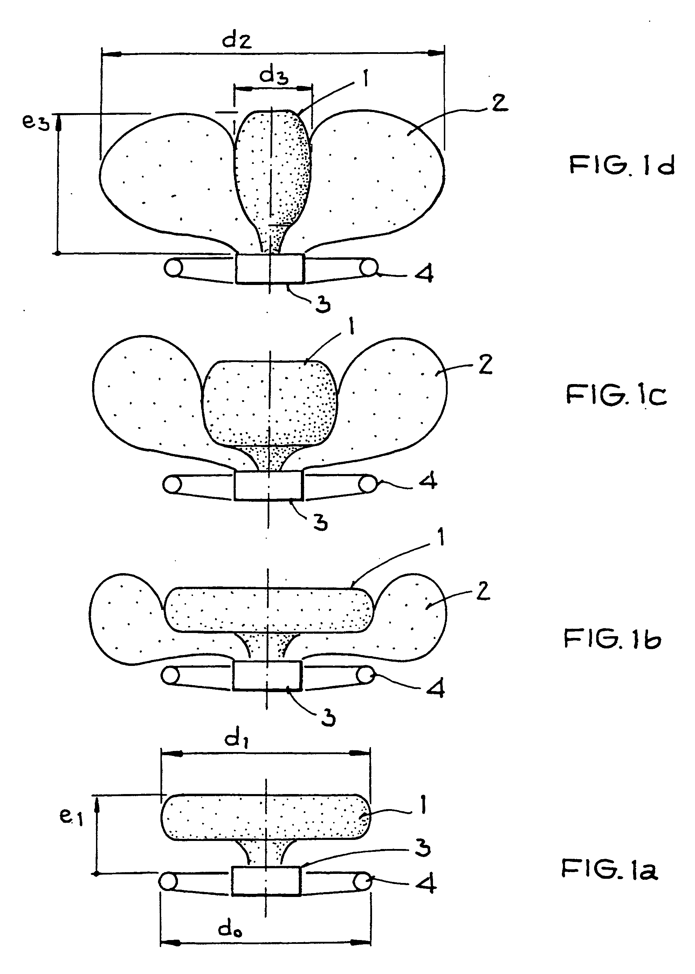

Die Figur 1 zeigt den zeitlichen Ablauf der Entfaltung der Airbagvorrichtung in mehreren Stufen anhand der Figuren 1 a bis 1 d.

In Figur 1a ist zu erkennen, in welcher Form der erste Airbag 1 unverzüglich ausgelöst wird, nachdem bspw. ein Precrashsensor einen unvermeidbaren Unfall detektiert oder ein an der Fahrzeugaußenhaut angebrachter Crashsensor ausgelöst oder das Beschleunigungssignal die erste beschleunigungsabhängige Schwelle überschritten hat. Die Formung und die von der Gasquelle 3 gelieferte Gasmenge sind so bestimmt, daß der erste Airbag 1 im mit dieser Gasmenge gefüllten Zustand zunächst eine kleine Aufprallzone abdeckt, nämlich einen dem Lenkrad 4 entsprechenden Durchmesser d1, und ein im Verhältnis zum Abstand zwischen Lenkrad und Fahrer kurze Entfaltungslänge e1 in Richtung des Fahrers aufweist.

Im Vergleich zu den eher kugelförmigen Airbags im Stand der Technik wird eine Entfaltungslänge im Bereich einiger Zentimeter angestrebt, bspw. 5, 10 oder 15 cm.

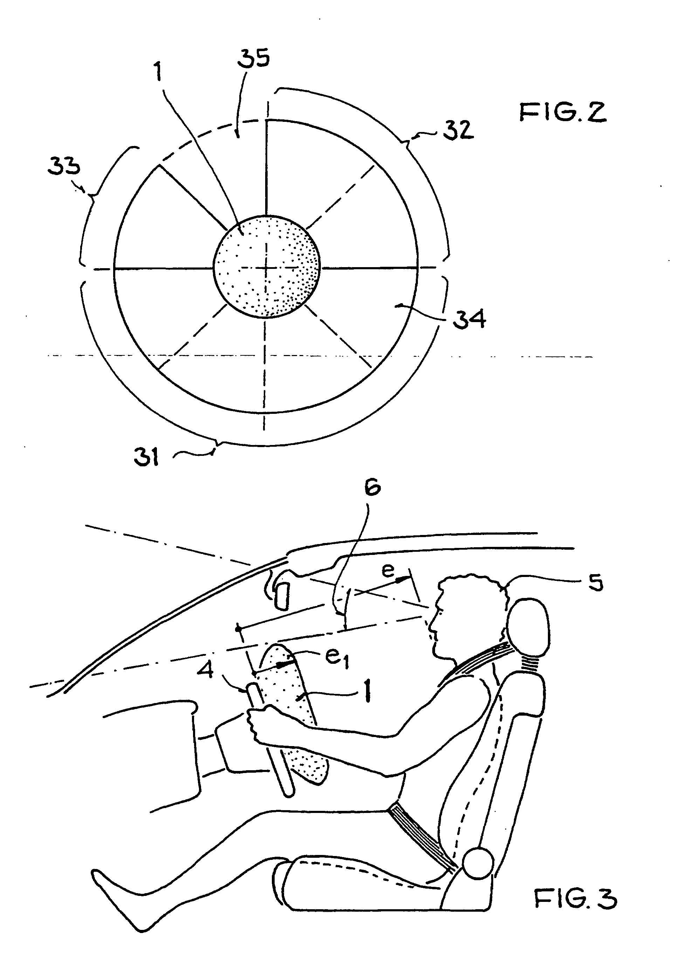

Indem der Durchmesser d1 des ersten Airbags in dieser Stufe annähernd dem Durchmesser des Lenkrades d0 entspricht und die Entfaltungslänge e1 entsprechend gering ist, wird der Fahrer bereits frühzeitig bei einem Aufprall auf das Lenkrad durch diesen ersten Airbag geschützt, ohne daß eine Gefährdung für kleine Personen oder für atypische Sitzpositionen bestände. Zudem kann er weiterhin das Verkehrsgeschehen beobachten und lenkend eingreifen, wie dies noch näher in Figur 3 dargestellt wird. Dieser erste Airbag hat eine lange Standzeit, d.h. er erschlafft zunächst kaum, so daß die Bestimmung des Zeitpunkts der Auslösung des ersten Airbags flexibler und weniger kritisch für die Schutzwirkung ist.

Die Figuren 1b bis 1d zeigen nun die stufenweise Auslösung des zweiten Airbags 2, der beim Überschreiten einer zweiten beschleunigungsabhängigen Schwelle sich in diesem Beispiel allseitig ringförmig um den ersten Airbag 1 schließt. Der Airbag 2 vergrößert damit einerseits den Durchmesser D2 der Aufprallzone, verstärkt andererseits die Schutzwirkung zusätzlich, indem die Entfaltungslänge des ersten und oder zweiten Airbags stufenweise erhöht wird, wie dies anhand von Figur 1 mit der Entfaltungslänge e3 deutlich erkennbar wird. In den Figuren 1b bis 1d ist dabei deutlich zu erkennen, daß der zweite Airbag 2 aufgrund eines höheren Gasdrucks den ersten Airbag 1 komprimiert und die Entfaltungslänge des ersten Airbags 1 von e1 auf e3 in Richtung des Fahrers verlängert. Der Durchmesser des ersten Airbags 1 schrumpft dabei von d1 auf d3. Grundsätzlich ist ein solches Auffüllverhalten der Airbags 1 und 2 bereits durch eine Gasquelle 3, beispielsweise aus einem Druckgasbehälter möglich, sofern die zugeführte Gasmenge und der jeweils zu füllende Airbag durch Ventile gesteuert sind.

Selbst kleine oder in atypischen Sitzpostionen befindliche Personen werden durch die Auslösung des zweiten Airbags keinesfalls so gefährdet wie im Stand der Technik, da durch das seitlich äußere Umschließen des zweiten Airbags keine direkte Gefahr für diese Personen einhergeht und die Verlängerung der Entfaltungslänge durch die Komprimierung des ersten Airbags deutlich schwächer, verzögert und langsamer erfolgt.

Federelastische Formungsmittel im ersten Airbag ermöglichen eine Anpassung ihrer Länge an die jeweilige Entfaltungslänge e1-e3 des ersten Airbags, können zudem die Verformung des ersten Airbags zurückstellen, wenn der Gasdruck im ersten Airbag wieder abnimmt.

Die Ausgestaltung mit einem kleinen ersten Airbag und einem den ersten komprimierenden zweiten Airbag kann grundsätzlich auch für andere Schutzbereiche, bspw. den Beifahrer genutzt werden. Auch dort kann zunächst ein erster Airbag mit kurzer Entfaltungslänge als ein flaches Kissen mit bspw. rechteckiger Aufprallzone vor dem Armaturenbereich entfaltet werden, der durch einen zweiten schlauchförmig seitlich außen verlaufenden Airbag, bspw. in Form eines Schlauchs auf der Oberseite zur Windschutzscheibe hin und einen Schlauch zum Kniebereich hin ergänzt und komprimiert wird, so dass sich die Entfaltungslänge auch des ersten Airbags entsprechend erhöht. Der Querschnitt entspricht dabei weitgehend dem in Figur 1 gezeigten.

Für Airbags werden häufig pyrotechnisch zündbare Gasgeneratoren eingesetzt, so daß Figur 2 eine Gasquelle mit mehreren voneinander unabhängig zündbaren Stufen 30, 31, 32, 33 in jeweils voneinander separierten Brennkammern enthält, die über entsprechende Ausströmöffnungen mit den jeweiligen Airbags 1 und 2 verbunden sind. So dient beispielsweise die innere Stufe 30 als erste Gasquelle zur Auslösung des ersten Airbags. Die Stufen 31, 32 und 33 dienen der Auslösung des zweiten Airbags 2, wobei die voneinander unabhängig zündbaren Stufen 31, 32, 33 ermöglichen, den Gasdruck im zweiten Airbag 2 gezielt anzupassen und insbesondere die Entfaltungslänge (e1 bis e3) des ersten Airbags 1 durch diese Stufen des zweiten Airbags zu steuern. Die Brennkammern der Stufen 31, 32 und 33 führen dann in den gemeinsamen Airbag 2.

In ganz besonders vorteilhafter Weise sind die Stufen 31, 32, 33 dabei aus Segmenten 34 aufgebaut und weisen eine binäre Abstufung auf, d.h. die Stufe 31 enthält vier Segmente 34, die Stufe 32 zwei Segmente und die Stufe 33 ein Segment, so daß insgesamt sieben unterschiedliche Gasmengen im zweiten Airbag 2 erzeugt werden können. Das freie Segment 35 dient dabei bspw. der Zuführung der Zündleitung.

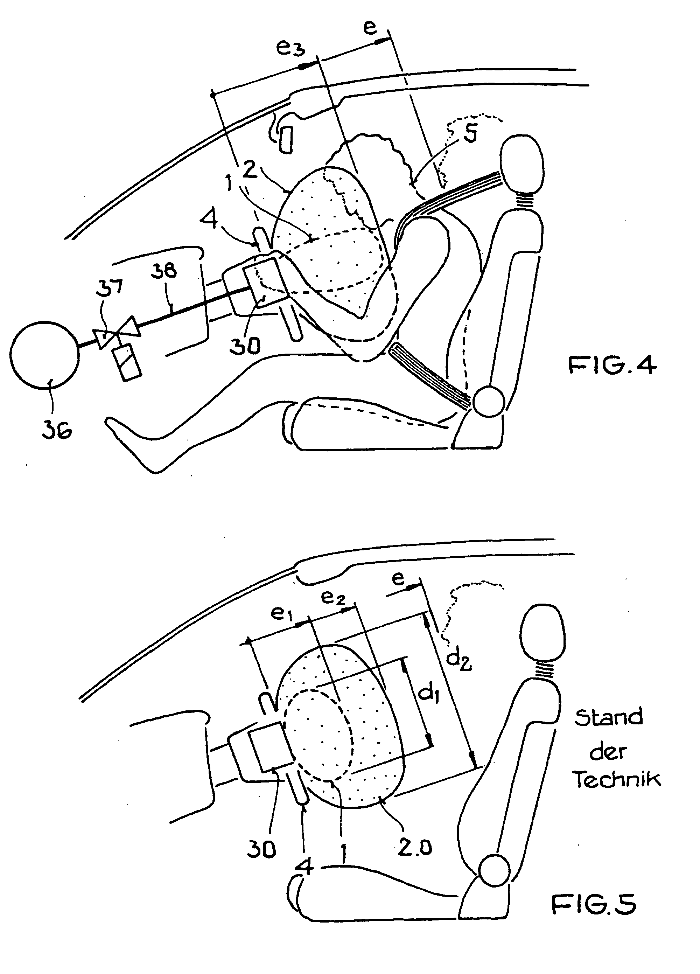

Die Figur 3 skizziert den Innenraum eines Fahrzeuges mit dem Fahrer 5 und dem Lenkrad 4, wobei das im Fahrzeug erfaßte Beschleunigungssignal bereits die erste Beschleunigungsschwelle überschritten hat und somit der erste Airbag 1 ausgelöst wurde. Deutlich ist zu erkennen, daß die Formung und Gasmenge des ersten Airbags 1 so gewählt sind, daß der Sichtbereich 6 des Fahrers nur unwesentlich eingeschränkt wurde und andererseits der Fahrer einen ersten Schutz gegen den Aufprall auf das Lenkrad 4 erhält. Gerade auch kleine und in "Out-of-Position" befindliche Personen erfahren durch die Auslösung dieses ersten Airbags mit seiner geringen Entfaltungslänge keinen Schaden sondern werden gegen einen Aufprall zumindest hinreichend geschützt. Die im Verhältnis zum Anstand e zwischen Lenkrad und Fahrer kurze Entfaltungslänge e1 des ersten Airbags 1 kann durch unterschiedliche Elastizität des Airbags im Front- und Seitenbereich oder durch innenliegende Formen der Bänder erzeugt werden, wobei die formenden Bänder bei Auslösung des zweiten Airbags und Komprimierung des ersten durch den zunehmenden Gasdruck auch im ersten Airbag 1 reißen oder bevorzugt sich rückstellbar federelastisch verformen und so die in Figur 4 gezeigte Verformung ermöglichen.

Figur 4 zeigt nun die Auslösung auch des zweiten Airbags 2 in der in der Figur 1 dargestellten Weise, wobei sich neben dem Durchmesser des geschützten Bereichs insbesondere die Entfaltungslänge auf E3 vergrößert und somit anstelle eines flachen Kissens, wie Airbag 1 in Figur 3 zu bewerten ist, die Form herkömmlicher Airbags annimmt und so einen möglichst vollständigen Schutz des Insassen gewährt. Grundsätzlich ist es dabei denkbar, die Entfaltungslängen des ersten und zweiten Airbags auch in Abhängigkeit von der ungehinderten Ausbreitung im Fahrgastraum stufenweise zu steuern, wie in einer anderen Airbagausgestaltung dies bereits der DE 197 03 945 A1 entnommen werden kann. In Figur 4 ist darüber hinaus dargestellt, daß für dieses Beispiel die Gasquelle 30 des ersten Airbags im Lenkrad 4 angeordnet wurde, jedoch die Gasquelle des zweiten Airbags 2 durch einen Druckgasbehälter 36 außerhalb des Fahrgastinnenraums realisiert wurde und dieser Druckgasbehälter durch ein Ventil 37 und eine Druckleitung 38 mit dem zweiten Airbag verbunden ist, wobei durch entsprechende Ausströmöffnungen das Druckgas in den zweiten Airbag 2 geleitet wird.

Die Figur 6 zeigt den zeitlichen Verlauf des Verfahrens zum Auslösen einer solchen Insassenschutzvorrichtung unter Verwendung einer Erkennungseinrichtung von Größe und/oder Position des Insassen.

Im Stand der Technik mußte für die Auslösung eines Airbags eine beschleunigungsabhängige Schwelle Δv, verwendet werden, da die im Stand der Technik üblicherweise verwendeten großen Airbags ein großes Volumen, aber auch eine schnelle Erschlaffung bzw. kürze Standzeit aufweisen. Dabei mußte Größe und/oder Position des Insassen berücksichtigt werden, da anderenfalls dieser durch den Airbag verletzt wird.

Im Gegensatz dazu wird es durch die Verwendung einer Insassenschutzvorrichtung mit einem ersten kleinen und einem zweiten seitlich umschließenden Airbag möglich, daß der erste Airbag frühzeitig bereits zu t0 beim Überschreiten einer ersten beschleunigungsabhängigen Schwelle Δv₀ unabhängig von der Größe und/oder Position des Insassen ausgelöst wird, da dieser aufgrund der geringen Entfaltungslänge auch Insassen "Out-of-Position" nicht gefährdet.

Der zweite Airbag wird dann selbstverständlich in Abhängigkeit von Größe und/oder Position des Insassen bei einer zweiten, höheren beschleunigungsabhängigen Schwelle Δv₂ ausgelöst, wobei für die Entscheidung über die Stärke der Auslösung des zweiten Airbags bis t2 deutlich mehr Zeit zur Verfügung steht als im Stand der Technik bei t1.

Der erste Airbag weist hingegen eine sehr lange Standzeit f0 auf, um den Insassen nicht nur frühzeitg, sondern eben auch über die gesamte Dauer des Unfalls einschließlich eventueller zweiter Aufprallsituationen hinreichend zu schützen, währenddessen der zweite, außen umschließende Airbag wieder erschlafft, wie in f2 verdeutlicht werden soll.

## Patentansprüche

1. Insassenschutzvorrichtung im Lenkrad (4) eines Kraftfahrzeuges mit einer Steuerung zur Auslösung beim Auftreten eines Unfalls, wobei
a) ein erster Airbag (1) für eine erste Stufe der Auslösung und ein zweiter Airbag (2) für eine unabhängig auslösbare zweite Stufe der Auslösung vorgesehen ist,
**dadurch gekennzeichnet dass**
b) die Formung sowie die von einer Gasquelle (3) gelieferte Gasmenge des ersten Airbags (1) so bestimmt sind, daß dieser erste Airbag (1) im mit dieser Gasmenge gefüllten Zustand eine dem Durchmesser des Lenkrads (4) entsprechende Aufprallzone und eine im Verhältnis zum Abstand (e) zwischen Aufprallzone und Insassen kurze Entfaltungslänge (e1) in Richtung des Insassen (5) aufweist und so ein flaches Kissen bildet, das den Sichtbereich (6) des Insassen (5) nur unwesentlich einschränkt,
c) der zweite Airbag (2) für eine zeitlich nachfolgend auslösbare zweite Stufe der Auslösung vorgesehen ist, bei der der zweite Airbag (2) die Aufprallzone vergrößert.

2. Insassenschutzvorrichtung nach Anspruch 1, **dadurch gekennzeichnet dass** der zweite Airbag (2) im gefüllten Zustand sich schlauchförmig seitlich außen zumindest teilweise um den ersten Airbag (1) schließt und beide Airbags (1,2) zusammen eine zweite, größere Aufprallzone bilden.

3. Insassenschutzvorrichtung nach einem der vorangehenden Ansprüche, **dadurch gekennzeichnet dass**
a) im nach dem Auslösen des ersten Airbags (1) in diesem (1) ein erster Gasdruck herrscht und im zweiten Airbag (2) nach dem Auslösen einer zweiten Gasquelle (31, 32, 33; 36) ein höherer, zweiter Gasdruck herrscht und
b) der zweite Airbag so um den ersten Airbag (1) geformt ist, dass der zweite Airbag (2) mit dem höheren Gasdruck den ersten Airbag (1) verformt und die Entfaltungslänge (e1, e2, e3) des ersten Airbags (1) in Richtung des Insassen (5) verlängert (e2, e3).

4. Insassenschutzvorrichtung nach Anspruch 3, **dadurch gekennzeichnet dass** die zweite Gasquelle mehrere voneinander unabhängig zündbare Stufen (31, 32, 33) aufweist, so daß der Gasdruck im zweiten Airbag (2) gezielt anpaßbar ist.

5. Insassenschutzvorrichtung nach Anspruch 4, **dadurch gekennzeichnet dass** die Entfaltungslänge (e1, e2, e3) des ersten Airbags (1) durch die voneinander unabhängig zündbaren Stufen (31, 32, 33) des zweiten Airbags (2) steuerbar ist.

6. Insassenschutzvorrichtung nach einem der Ansprüche 3 bis 5, **dadurch gekennzeichnet dass**
a) im ersten Airbag (1) federelastische Formungsmittel vorgesehen sind, die
a1) eine erste Länge entsprechend der kurzen Entfaltungslänge (e1) des ersten Airbags (1) aufweisen, wenn der zweite Airbag (2) nicht ausgelöst ist, und
a2) die sich elastisch auf eine zweite Länge vergrößern, wenn der erste Airbag (1) durch den zweiten Airbag (2) verformt und die Entfaltungslänge (e1, e2, e3) des ersten Airbags (1) in Richtung des Insassen (5) verlängert wird und
b) die Verformung des ersten Airbags (1) sich zurückformt, wenn der Gasdruck im ersten Airbag (1) wieder abnimmt, indem sich die federeleastischen Formungsmittel von der zweiten Länge zumindest auf die erste Länge zurückstellen.

7. Insassenschutzvorrichtung nach einem der vorangehenden Ansprüche, **dadurch gekennzeichnet dass** der erste Airbag (1) eine deutlich geringere Erschlaffung bzw. längere Standzeit aufweist als der zweite Airbag (2).

8. Insassenschutzvorrichtung nach einem der vorangehenden Ansprüche, **dadurch gekennzeichnet dass** der Gasdruck im zweiten Airbag (2) in Abhängigkeit von Größe und/oder Position des Insassen anpaßbar ist.

## Claims

1. Occupant protection device in the steering wheel (4) of a motor vehicle comprising a control for deployment in the event of an accident, wherein
a) a first air bag (1) for a first stage of deployment and a second air bag (2) for an independently deployable second stage of deployment are provided,
**characterised in that**
b) the shape and the gas quantity supplied by a gas source (3), of the first air bag (1) are determined in such a way that in the state filled with this gas quantity, this first air bag (1) has an impact zone corresponding to the diameter of the steering wheel (4) and a short expansion length (e1) in the direction of the occupant (5) in relation to the spacing (e) between the impact zone and occupant and thus forms a flat cushion which only limits to a negligible degree the range of vision (6) of the occupant (5),
c) the second air bag (2) is provided for a temporally following deployable second stage of deployment, in which the second air bag (2) enlarges the impact zone.

2. Occupant protection device according to claim 1, **characterised in that** in the filled state, the second air bag (2) at least partially surrounds the first air bag (1) laterally outwardly in tubular manner and the two air bags (1, 2) together form a second, larger impact zone.

3. Occupant protection device according to any one of the preceding claims, **characterised in that**
a) after deployment of the first air bag (1), a first gas pressure prevails therein (1), and after deployment of a second gas source (31, 32, 33; 36), a higher, second gas pressure prevails in the second air bag (2) and
b) the second air bag is formed around the first air bag (1) in such a way that the second air bag (2) with the higher gas pressure deforms the first air bag (1) and increases (e2, e3) the expansion length (e1, e2, e3) of the first air bag (1) in the direction of the occupant (5).

4. Occupant protection device according to claim 3, **characterised in that** the second gas source has a plurality of stages (31, 32, 33) which can be ignited independently of one another, so that the gas pressure in the second air bag (2) can be purposefully adapted.

5. Occupant protection device according to claim 4, **characterised in that** the expansion length (e1, e2, e3) of the first air bag (1) can be controlled by the stages (31, 32, 33) of the second air bag (2) which can be ignited independently of one another.

6. Occupant protection device according to any one of claims 3 to 5, **characterised in that**
a) provided in the first air bag (1) are elastic forming means which
a1) have a first length corresponding to the short expansion length (e1) of the first air bag (1) when the second air bag (2) is not deployed, and
a2) which elastically increase to a second length when the first air bag (1) is deformed by the second air bag (2) and the expansion length (e1, e2, e3) of the first air bag (1) is increased in the direction of the occupant (5) and
b) the deformation of the first air bag (1) is reversed, when the gas pressure in the first bag reduces again while the elastic forming means are returned from the second length at least to the first length.

7. Occupant protection device according to any one of the preceding claims, **characterised in that** the first air bag (1) has a significantly lower relaxation or a longer inflated time than the second air bag (2).

8. Occupant protection device according to any one of the preceding claims, **characterised in that** the gas pressure in the second air bag (2) can be adapted as a function of the size and/or position of the occupant.

## Revendications

1. Dispositif de protection d'occupant, situé dans le volant de direction (4) d'un véhicule automobile, comportant une commande pour le déclenchement en cas d'accident, dans lequel
a) un premier airbag (1) est prévu pour un premier étage du déclenchement et un deuxième airbag (2) est prévu pour un deuxième étage du déclenchement à déclencher indépendamment,
**caractérisé en ce que**
b) la production ainsi que la quantité de gaz, fournie par une source de gaz (3), du premier airbag (1) sont déterminées de telle sorte que ce premier airbag (1) présente, dans l'état rempli avec cette quantité de gaz, une zone d'impact correspondant au diamètre du volant (4) ainsi qu'une longueur de déploiement (e1) en direction de l'occupant (5) qui est courte en relation à la distance (e) entre la zone d'impact et l'occupant, et forme ainsi un coussin plat qui ne restreint que peu la zone de visibilité (6) de l'occupant (5),
c) le deuxième airbag (2) est prévu pour un deuxième étage du déclenchement, à déclencher temporellement à la suite, lors duquel le deuxième airbag (2) agrandit la zone d'impact.

2. Dispositif de protection d'occupant selon la revendication 1, **caractérisé en ce que**, dans l'état rempli, le deuxième airbag (2) se raccorde en forme de tuyau latéralement à l'extérieur au moins partiellement autour du premier airbag (1), et les deux airbags (1, 2) forment conjointement une deuxième zone d'impact plus grande.

3. Dispositif de protection d'occupant selon l'une des revendications précédentes, **caractérisé en ce que**
a) après déclenchement du premier airbag (1), une première pression de gaz règne dans celui-ci (1), et après déclenchement d'une deuxième source de gaz (31, 32, 33 ; 36) une deuxième pression de gaz plus élevée règne dans le deuxième airbag (2), et
b) le deuxième airbag est ainsi formé autour du premier airbag (1) que le deuxième airbag (2) avec la pression de gaz plus élevée déforme le premier airbag (1) et fait prolonger (e2, e3) la longueur de déploiement (e1, e2, e3) du premier airbag (1) en direction de l'occupant (5).

4. Dispositif de protection d'occupant selon la revendication 3, **caractérisé en ce que** la deuxième source de gaz comprend plusieurs étages (31, 32, 33) à allumer indépendamment les uns des autres, de sorte que la pression de gaz dans le deuxième airbag (2) est adaptable de façon ciblée.

5. Dispositif de protection d'occupant selon la revendication 4, **caractérisé en ce que** la longueur de déploiement (e1, e2, e3) du premier airbag (1) peut être commandée par les étages (31, 32, 33), à allumer indépendamment les uns des autres, du deuxième airbag (2).

6. Dispositif de protection d'occupant selon l'une des revendications 3 à 5, **caractérisé en ce que**
a) dans le premier airbag (1) sont prévus des moyens élastiques de mise en forme qui
a1) présentent une première longueur en correspondance de la courte longueur de déploiement (e1) du premier airbag (1) lorsque le deuxième airbag (2) n'est pas déclenché, et qui
a2) s'agrandissent élastiquement jusqu'à une deuxième longueur lorsque le premier airbag (1) est déformé par le deuxième airbag (2) et que la longueur de déploiement (e1, e2, e3) du premier airbag (1) est prolongée en direction de l'occupant (5), et
b) la déformation du premier airbag (1) s'annule pour reprendre sa forme initiale lorsque la pression de gaz dans le premier airbag (1) se réduit du fait que les moyens élastiques de mise en forme retournent depuis la deuxième longueur au moins jusqu'à la première longueur.

7. Dispositif de protection d'occupant selon l'une des revendications précédentes, **caractérisé en ce que** le premier airbag (1) présente un affaissement nettement plus faible ou une durée d'application plus longue que le deuxième airbag (2).

8. Dispositif de protection d'occupant selon l'une des revendications précédentes, **caractérisé en ce que** la pression de gaz dans le deuxième airbag (2) est adaptable en fonction de la taille et/ou de la position de l'occupant.
